# EUROPÄISCHE PATENTSCHRIFT

(11) **EP 0 573 793 B1**
(45) Veröffentlichungstag und Bekanntmachung des Hinweises auf die Patenterteilung: **21.07.1999**
(21) Anmeldenummer: 93107525.3
(22) Anmeldetag: 08.05.1993
(51) Int. Cl.: C08F 220/04

(54) **Wasserlösliche Polymerdispersionen**
Aqueous dispersions of water-soluble polymers
Dispersions de polymères solubles dans l'eau

(30) Priorität: 18.05.1992 DE 4216167
(43) Veröffentlichungstag der Anmeldung: 15.12.1993
(73) Patentinhaber: Röhm GmbH, 64293 Darmstadt (DE)
(72) Erfinder: Messner, Bernfried, Dr., W-6100 Darmstadt (DE); Quis, Peter, Dr., W-6100 Darmstadt (DE); Schmitt, Günter, Dr., W-6100 Darmstadt (DE); Silva, Gabriele, W-6100 Darmstadt (DE); Braum, Manfred, W-6500 Mainz-Gonsenheim (DE)

(56) Entgegenhaltungen:
- EP-A- 0 271 077
- DE-A- 2 924 663

## Beschreibung

### Gebiet der Erfindung

Die Erfindung betrifft wasserlösliche Polymerdispersionen, enthaltend mindestens ein wasserlösliches Monomeres, mindestens ein hydrophobes Monomeres und gegebenenfalls mindestens ein amphiphiles Monomeres als monomere Bestandteile.

### Stand der Technik

Wäßrige Dispersionen wasserlöslicher Polymerisate werden beispielsweise als Flockungsmittel bei der Abwasserbehandlung, als Entwässerungsmittel nach Abtrennung der wäßrigen Phase, als Retentionsmittel bei der Papierherstellung, als Bodenverbesserungsmittel oder als Dispergiermittel eingesetzt.
EP 170 394 beschreibt eine mit Wasser mischbare Flüssigkeit bestehend aus Partikeln, aufgebaut aus einem hochmolekularen Polymergel, das Teilchengrößen von über 20 µm aufweist, in wäßriger Lösung. Die kontinuierliche Phase ist hierbei eine wäßrige Lösung, enthaltend ein Äquilibrierungsmittel, das den Wassergehalt der Gelpartikel mit dem Wasseranteil in der kontinuierlichen Phase im Gleichgewicht hält und das somit eine Agglomeration der Gelpartikel verhindert. Als bevorzugte Äquilibrierungsmittel werden das Natriumsalz der Polyacrylsäure bzw. Polydiallyldimethylammoniumchlorid (Poly-DADMAC) verwendet.
In EP 183 466 wird ein Verfahren zur Herstellung einer wasserlöslichen Polymerdispersion beschrieben, gekennzeichnet durch Polymerisieren eines wasserlöslichen Monomeren unter Rühren in einer wäßrigen Lösung von wenigstens einem Salz in Gegenwart eines Dispergiermittels. Hierbei finden Polyole, Polyalkylenether, Alkalisalze der Polyacrylsäure und Alkalisalze der Poly-2-Acrylamid-2-methylpropansulfonsäure als Dispergiermittel bzw. Salze, die in wäßriger Lösung das Polymerisat nicht solvatisieren, Verwendung. DE-PS 29 24 663 umfaßt ein Verfahren zur Herstellung einer wäßrigen Dispersion aus einer wasserlöslichen Polymermasse mit guter Stabilität und Fließfähigkeit, wobei das wasserlösliche Polymerisat wenigstens ein wasserlösliches ethylenisch ungesättigtes Monomeres enthält und wobei als Dispergiermittel Polyalkylenether, Polyethylenimin und andere, gegebenenfalls in Gegenwart von anorganischen Salzen, anwesend sein können. Die so hergestellte wäßrige Dispersion kann, gegebenenfalls nach Verdünnen mit Wasser, als Flockungshilfsmittel, Verdickungsmittel, Bodenkonditionierungsmittel und für weitere Anwendungen eingesetzt werden.
In JP Kokkai 59 108 074 werden Verdickungsmittel beschrieben, bestehend aus Polymerisaten in wäßriger Lösung, die als monomere Bestandteile (Meth)acrylsäure und/oder deren Salze, (Meth)acrylamide sowie Methyl- oder Ethylacrylat enthalten, mit Polyethylenglykol als Dispergiermittel.

### Aufgabe und Lösung

Die in EP 170 394 beschriebenen, Gelpartikel enthaltenden, wäßrigen Lösungen haben zum Nachteil, daß sie nach längeren Standzeiten stark erhöhte Viskositäten aufweisen, die nur durch die Anwendung von Schergefällen, wie beispielsweise Rühren, reduziert werden können. Die Flüssigkeitseigenschaften hängen hierbei von einem komplexen Gleichgewicht zwischen Polymerisat, Äquilibrierungsmittel, Wassergehalt und Teilchengröße der Gelpartikel ab.
In EP 183 466 werden wasserlösliche Polymerisate als Dispersionen in wäßrigen Salzlösungen unter Zuhilfenahme eines Dispergiermittels beansprucht. Nachteilig bei diesen Dispersionen ist der hohe Salzgehalt der wäßrigen Phase (bis zu 30 Gew.-%) im Vergleich zu einem relativ geringen Polymerisat(= Wirkstoff-)gehalt (bis zu 20 Gew.-%), der bei bestimmten Anwendungen solcher Dispersionen zu Abwasserproblemen führt.
Nachteilig für die Verwendung von wäßrigen Dispersionen gemäß DE-PS 29 24 663 wirken sich die hohen Anteile an Dispergiermittel bezogen auf das wasserlösliche Polymerisat aus. Verwendet man o.g. Dispersionen beispielsweise als Flockungsmittel für elektrisch geladene Teilchen, so wird der Wirkstoff an hochmolekularen ionischen Polymeren durch das im Vergleich hierzu niedermolekulare Dispergiermittel reduziert.
Die nach JP Kokkai 59 108 074 hergestellten Polymerisate mit Verdickungswirkung besitzen mittlere Molekulargewichte M_{w} zwischen etwa 10⁵ und 5 x 10⁵ Dalton (Gewichtsmittel), die für die Verwendung als Flockungsmittel deutlich zu niedrig sind.

Aus o.a. Stand der Technik resultiert die Aufgabe, wäßrige Dispersionen wasserlöslicher Polymerisate zur Verfügung zu stellen, die eine niedrige Viskosität, einen hohen Gehalt an Polymerisat-Wirkstoff, ein hohes Polymerisat-Molekulargewicht und eine Salz-freie Wasserphase aufweisen.
Es wurde gefunden, daß wäßrige Dispersionen wasserlöslicher Polymerisate, gebildet durch Polymerisation eines Gemisches A) aus verschiedenen Monomerbestandteilen a1), a2) und gegebenenfalls a3) in Gegenwart eines polymeren Dispergiermittels D, dadurch gekennzeichnet,
daß das Gemisch A) aus folgenden chemisch verschiedenen Monomerbestandteilen aufgebaut ist:
a1) 99 bis 70 Gew.-% mindestens eines wasserlöslichen Monomeren
a2) 1 bis 30 Gew.-% mindestens eines hydrophoben Monomeren der Formel I 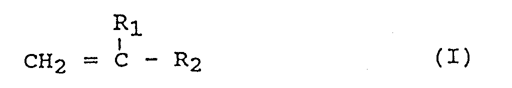 wobei
   - R₁ =: Wasserstoff oder Alkyl mit 1 bis 4 Kohlenstoffatomen und
   - R₂ =: Alkyl mit 1 bis 4 Kohlenstoffatomen, Cycloalkyl mit 5 bis 12 Kohlenstoffatomen, Aryl mit 6 bis 12 Kohlenstoffatomen,
   oder = 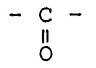 O - R₃ mit R₃ = Alkyl mit 2 bis 8 Kohlenstoffatomen, Cycloalkyl mit 5 bis 12 Kohlenstoffatomen oder Aryl mit 6 bis 12 Kohlenstoffatomen sind,
   und gegebenenfalls
a3) 0 bis 20 Gew.-% mindestens eines amphiphilen Monomeren, wobei sich die Monomerkomponenten a1), a2) und a3) jeweils zu 100 Gew.-% ergänzen, sowie daß die wasserlöslichen Polymerisate ein mittleres Molekulargewicht M_{w} (Gewichtsmittel) von mindestens 10⁶ g/mol aufweisen,
   die o.a. Aufgabe hervorragend lösen.
In bevorzugten Ausführungen der Erfindung weist mindestens eines der wasserlöslichen Monomeren a1) mindestens eine ionische Gruppe auf, während das hydrophobe Monomere a2) eine Verbindung der Formel I ist : 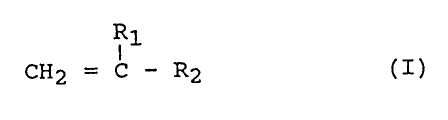 wobei
- R₁: für Wasserstoff oder Methyl
- R₂: für Alkyl mit 1 bis 4 Kohlenstoffatomen, für Cycloalkyl mit 5 bis 12 Kohlenstoffatomen, für Aryl mit 6 bis 12 Kohlenstoffatomen, oder für 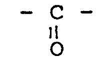 O - R₃ mit R₃ für Alkyl mit 2 bis 8 Kohlenstoffatomen stehen kann. Unter Aryl sei insbesondere ggfls. mit Cl bis C4-Alkylresten substituiertes Phenyl oder Naphthyl verstanden.

Das amphiphile Monomere a3) ist bevorzugt eine Verbindung der Formel II: wobei 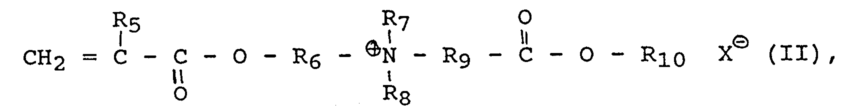
- R₅: für Wasserstoff oder Methyl,
- R₆: für Alkylen mit 1 bis 6 Kohlenstoffatomen,
- R₇ und R₈: unabhängig voneinander für Alkyl mit 1 bis 6 Kohlenstoffatomen,
- R₉: für Alkylen mit 1 bis 6 Kohlenstoffatomen
- R₁₀: für Alkyl mit 8 bis 32 Kohlenstoffatomen sowie X für Halogen, Pseudohalogen, SO₄CH₃, Acetat stehen können, wobei Pseudohalogen für -CN-, -OCN- oder -SCN-Gruppen steht,
oder eine Verbindung der Formel III: 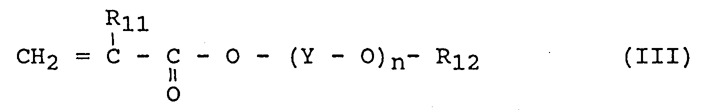 wobei
- R₁₁: für Wasserstoff oder Methyl
- R₁₂: für Alkyl mit 8 bis 32 Kohlenstoffatomen,
- Y: für Alkylen mit 2 bis 6 Kohlenstoffatomen
- und n: für eine ganze Zahl zwischen 1 und 50 stehen können.

Als polymere Dispergiermittel werden bevorzugt mit dem dispergierten Polymer unverträgliche Polyelektrolyte mit mittleren Molekulargewichten (Gewichtsmittel) M_{w} < 5 x 10⁵ g/mol oder Polyalkylenether eingesetzt.

### Durchführung der Erfindung

### Die Monomeren a1), a2) und a3)

Als Monomere a1) können beispielsweise Salze der Acryl-, und/oder der Methacrylsäure der allgemeinen Formel IV eingesetzt werden: 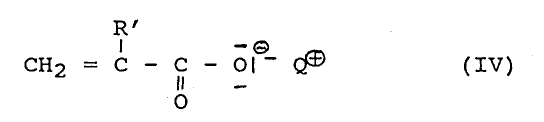 wobei
- R': für Wasserstoff oder Methyl und
- Q: für Alkalimetallionen, wie beispielsweise Na^{⊕} oder K^{⊕}, Ammoniumionen, wie beispielsweise NH₄^{⊕}, ^{⊕}NR₂H₂, ^{⊕}NR^{II}₃H oder ^{⊕}NR^{II}₄ mit R^{II} = Alkyl mit 1 bis 6 Kohlenstoffatomen oder weitere einwertige, positive geladene Ionen stehen können.

Zu Monomeren a1) der Formel IV gehören beispielsweise Natrium(meth)acrylat, Kalium(meth)acrylat oder Ammonium(meth)acrylat.

Desweiteren können beispielsweise die Acryl- und/oder die Methacrylsäure selbst als Monomerkomponente a1), sowie Methacrylamide der Formel V verwendet werden: 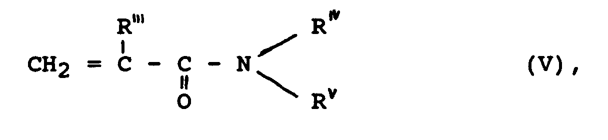 wobei
- R^{III}: für Wasserstoff oder Methyl, sowie
- R^{IV} und R^{V}: unabhängig voneinander für Wasserstoff, für Alkyl mit 1 bis 5 Kohlenstoffatomen oder für Hydroalkyl mit 1 bis 5 Kohlenstoffatomen stehen können.

Als Monomere a1) der Formel V seien beispielhaft genannt: (Meth)acrylamid, N-Methyl(meth)acrylamid, N,N-Dimethyl(meth)acrylamid, N,N-Diethyl(meth)acrylamid, N-Methyl-N-ethyl(meth)acrylamid sowie N-Hydroxyethyl(meth)-acrylamid. Zur Herstellung der (Meth)acrylamide vergleiche beispielsweise Kirk-Othmer, Encyclopedia of Chemical Technology, Vol. 15, Seiten 346 bis 376, 3rd. Ed., Wiley Interscience, 1981.
Weiterhin können als Monomerkomponente a1) Monomere der Formel VI eingesetzt werden: 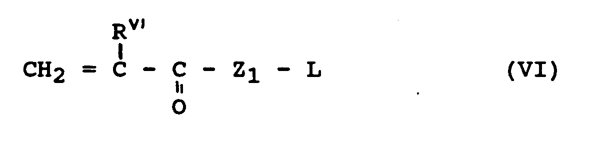 wobei
- R^{VI}: für Wasserstoff oder Methyl
- L: für die Gruppen 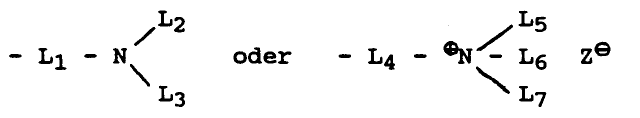 stehen und Z₁ für 0, NH oder NR₄
wobei
- L₁ und L₄: für einen Alkylenrest oder Hydroxyalkylenrest mit 2 bis 6 Kohlenstoffatomen, L₂, L₃, L₅, L₆ und L₇ für einen Alkylrest mit 1 bis 6 Kohlenstoffatomen, sowie Z für Halogen, Acetat, SO₄CH₃ stehen können.

Beispielhaft für Monomere a1) der Formel VI seien genannt: 2-(N,N-Dimethylamino)ethyl(meth)acrylat, 3-(N,N-Dimethylamino)propyl(meth)acrylat, 4-(N,N-Dimethylamino)butyl(meth)acrylat, 2-(N,N-Diethylamino)ethyl(meth)acrylat, 2-Hydroxy-3-(N,N-Dimethylamino)propyl(meth)acrylat, 2-(N,N,N-Trimethylammonium)ethyl(meth)acrylat-chlorid, 3-(N,N,N-Trimethylammonium)propyl(meth)acrylat-chlorid oder 2-Hydroxyl-3-(N,N,N-Trimethylammonium)propyl(meth)acrylat-chlorid bzw. die (Meth)acrylamide der o.g. Verbindungen, wie beispielsweise 2-Dimethylaminoethyl(meth)acrylamid, 3-Dimethylaminopropyl(meth)acrylamid oder 3-Trimethylammoniumpropyl(meth)acrylamid-chlorid. Als Monomerkomponenten a1) können weiterhin ethylenisch ungesättigte Monomere, die zur Bildung von wasserlöslichen Polymeren befähigt sind, eingesetzt werden, wie beispielsweise Vinylpyridin, N-Vinylpyrrolidon, Styrolsulfonsäure, N-Vinylimidazol oder Diallyldimethylammoniumchlorid. Dabei sind auch Kombinationen verschiedener, unter a1) angeführter wasserlöslicher Monomeren möglich.
Zur Darstellung der (Meth)acrylammonium-Salze vergleiche beispielsweise Kirk-Othmer, Encyclopedia of Chemical Technology, Vol. 15, Seiten 346 bis 376, 3rd. Ed., Wiley Interscience, 1981.

Die hydrophoben Monomere a2) sind Monomere der Formel I: 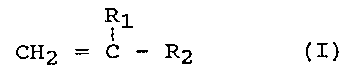 wobei
- R₁: für Wasserstoff oder Alkyl mit 1 bis 4 Kohlenstoffatomen und
- R₂: für Alkyl mit 1 bis 4 Kohlenstoffatomen, für Cycloalkyl mit 5 bis 12 Kohlenstoffatomen, für Aryl mit 6 bis 12 Kohlenstoffatomen, oder für 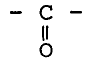 O - R₃ mit R₃ für Alkyl mit 2 bis 8 Kohlenstoffatomen, für Cycloalkyl mit 5 bis 12 Kohlenstoffatomen oder für Aryl mit 6 bis 12 Kohlenstoffatomen stehen können.

Beispielhaft seien hierfür genannt: Styrol, α-Methylstyrol, p-Methylstyrol, p-Vinyltoluol, Vinylcyclopentan, Vinylcyclohexan, Vinylcyclooctan, Isobuten, 2-Methylbuten-1, Hexen-1, 2-Methylhexen-1, 2-Propylhexen-1, Ethyl(meth)acrylat, Propyl(meth)acrylat, Isopropyl(meth)acrylat, Butyl(meth)acrylat, Isobutyl(meth)acrylat, Pentyl(meth)acrylat, Hexyl(meth)acrylat, Heptyl(meth)acrylat, Octyl(meth)acrylat, Cyclopentyl(meth)acrylat, Cyclohexyl(meth)acrylat, 3,3,5-Trimethylcyclohexyl(meth)acrylat, Cyclooctyl(meth)acrylat, Phenyl(meth)acryl, 4-Methylphenyl(meth)acrylat, 4-Methoxyphenyl(meth)acrylat. Es sind auch Kombinationen verschiedener, unter a2) angeführter hydrophober Monomeren möglich.
Amphiphile Monomere a3) können beispielsweise monomere Verbindungen der Formeln II oder III sein: 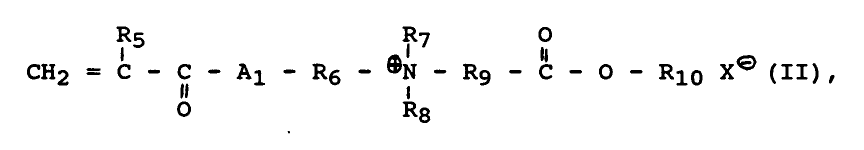 wobei
- A₁: für 0, NH, NR₄ mit R₄ für Alkyl mit 1 bis 4 Kohlenstoffatomen,
- R₅: für Wasserstoff oder Methyl,
- R₆: für Alkylen mit 1 bis 6 Kohlenstoffatomen,
- R₇ und R₈: unabhängig voneinander für Alkyl mit 1 bis 6 Kohlenstoffatomen,
- R₉: für Alkylen mit 1 bis 6 Kohlenstoffatomen
- R₁₀: für Alkyl, Aryl und/oder Aralkyl mit 8 bis 32 Kohlenstoffatomen und
- X: für Halogen, Pseudohalogen, SO₄CH₃ oder Acetat stehen können, bzw. 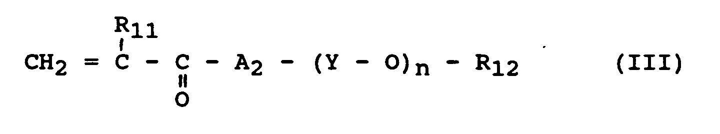
wobei
- A₂: für 0, NH, NR₁₃ mit R₁₃ für Alkyl mit 1 bis 4 Kohlenstoffatomen
- R₁₁: für Wasserstoff oder Methyl,
- R₁₂: für Alkyl, Aryl und/oder Aralkyl mit 8 bis 32 Kohlenstoffatomen,
- Y: für Alkylen mit 2 bis 6 Kohlenstoffatomen sowie
- n: für eine ganze Zahl zwischen 1 und 50 stehen können.
Zur Herstellung der amphiphilen Monomeren der Formel III vergleiche beispielsweise Kirk-Othmer, Encyclopedia of Chemical Technology, 3rd. Ed., Vol. 1, Seiten 330 bis 354 (1978) und Vol. 15, Seiten 346 bis 376 (1981), Wiley Interscience.

Beispielhaft seien hierfür genannt: 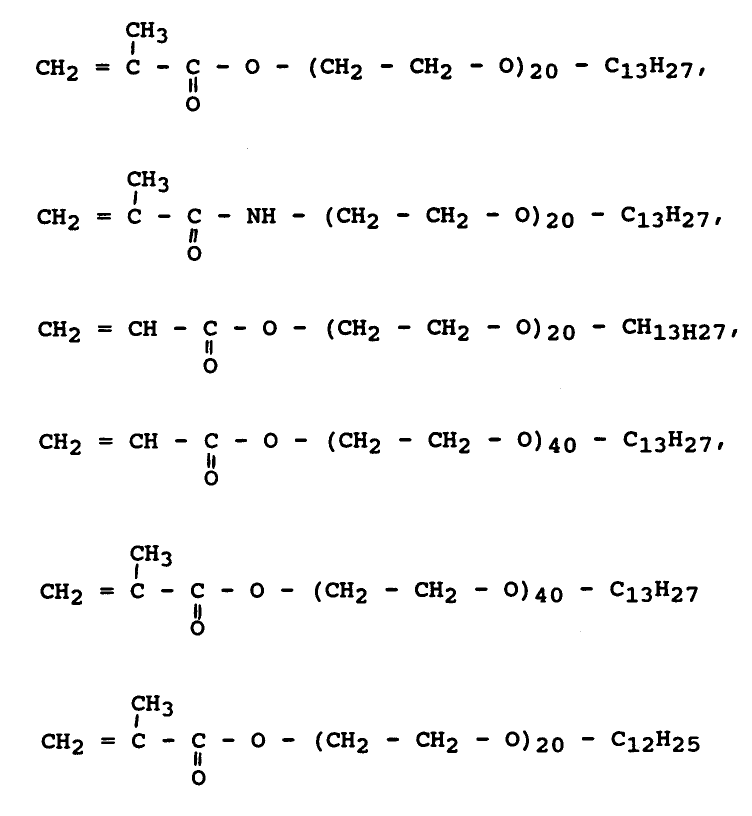 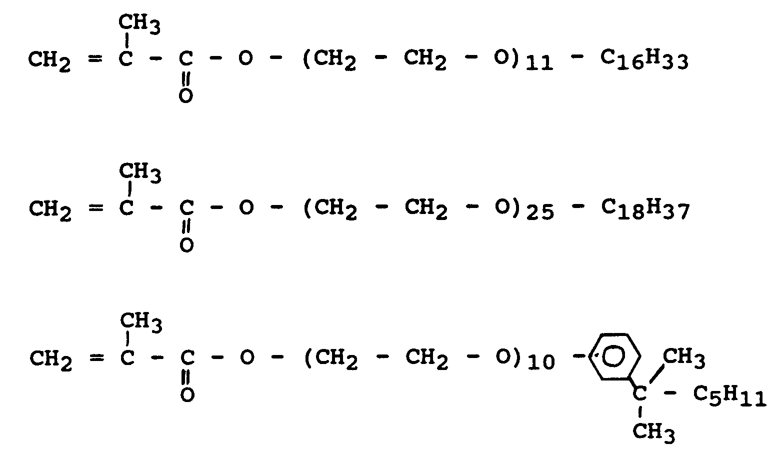 Desweiteren können als amphiphile Monomere a3) beispielsweise eingesetzt werden: 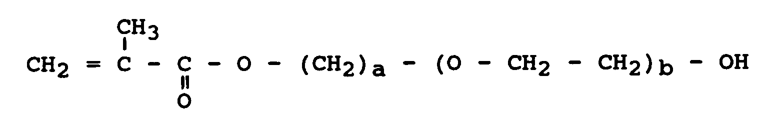 mit a = 6 bis 15 und b = 1 bis 50, 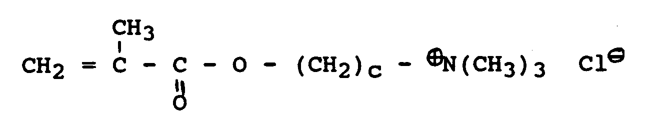 mit c = 6 bis 18 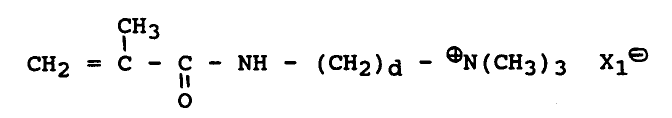 mit X₁^{⊖} = Cl^{⊖} oder SO₄CH₃^{⊖}
d = 6 bis 18 oder 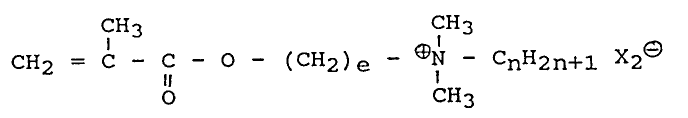 mit e = 2 bis 6 und n = 6 bis 18.
X₂^{⊖} = Cl^{⊖} oder SO₄CH₃^{⊖}

Dabei sind auch Kombinationen verschiedener, unter a3) angeführter amphiphiler Monomeren möglich.

### Das polymere Dispergiermittel D)

Das polymere Dispergiermittel unterscheidet sich signifikant in der chemischen Zusammensetzung und im mittleren Molekulargewicht M_{w} (Gewichtsmittel) von dem wasserlöslichen Polymerisat, bestehend aus dem Monomerengemisch A), wobei das polymere Dispergiermittel D) mit dem wasserlöslichen Polymerisat unverträglich ist. Die mittleren Molekulargewichte M_{w} der polymeren Dispergiermittel liegen im Bereich zwischen 10³ bis 5 x 10⁵ g/mol, vorzugsweise zwischen 10⁴ bis 4 x 10⁵ g/mol (zur Bestimmung von M_{w} vgl. H.F. Mark et al., Encyclopedia of Polymer Science and Technology, Vol. 10, Seiten 1 bis 19, J. Wiley, 1987).

Die polymeren Dispergiermittel D) enthalten wenigstens eine funktionelle Gruppe ausgewählt aus Ether-, Hydroxyl-, Carboxyl-, Sulfon-, Sulfatester-, Amino-, Imino-, tert.-Amino- und/oder quaternären Ammoniumgruppen. Beispielhaft für die Polymerisate D) seien genannt: Cellulosederivate, Polyethylenglykol, Polypropylenglykol, Copolymerisate aus Ethylenglykol und Propylenglykol, Polyvinylacetat, Polyvinylalkohol, Stärke und Stärkederivate, Dextran, Polyvinylpyrrolidon, Polyvinylpyridin, Polyethylenimin, Polyvinylimidazol, Polyvinylsuccinimid, Polyvinyl- - methylsuccinimid, Polyvinyl-1,3-oxazolidon-2, Polyvinyl-2-methylimidazolin, sowie Copolymerisate, die neben Kombinationen aus monomeren Bausteinen o.g. Polymerisate beispielsweise folgende Monomereinheiten enthalten können: Maleinsäure, Maleinsäureanhydrid, Fumarsäure, Itakonsäure, Itakonsäureanhydrid, (Meth)acrylsäure, Salze der (Meth)acrylsäure oder (Meth)acrylamid-Verbindungen.
Bevorzugt werden als polymere Dispergiermittel D) Polyalkylenether wie beispielsweise Polyethylenglykol, Polypropylenglykol oder Polybutylen-1,4-ether eingesetzt. Zur Herstellung von Polyalkylenethern vergleiche beispielsweise Kirk-Othmer, Encycloopedia of Chemical Technology, 3rd. Ed., Vol. 18, Seiten 616 bis 670, 1982, Wiley Interscience.

Besonders bevorzugt werden als polymere Dispergiermittel D) Polyelektrolyte verwendet, wie beispielsweise Polymerisate, enthaltend Monomerbausteine wie z.B. Salze der (Meth)acrylsäure als anionische Monomerbausteine oder mit Methylchlorid quaternierte Derivate von N,N-Dimethylaminoethyl(meth)acrylat, N,N-Dimethylaminopropyl(meth)acrylat oder N,N-Dimethylaminohydroxypropyl(meth)acrylat oder N,N-Dimethylaminopropyl(meth)acrylamid. Ganz besonders bevorzugt wird Poly(diallyldimethylammoniumchlorid) (Poly-DADMAC) mit einem mittleren Molekulargewicht M_{w} zwischen 5 x 10⁴ und 4 x 10⁵ Dalton als polymeres Dispergiermittel eingesetzt.
Zur Herstellung von Polyelektrolyten vergleiche beispielsweise Kirk-Othmer, Encyclopedia of Chemical Technology, 3rd. Ed., Vol. 18, Seiten 495 bis 530, 1982, Wiley Interscience.

Dabei ist zu beachten, daß dispergiertes Polymerisat und Dispergiermittel nicht entgegengesetzt elektrisch geladen sind. Desweiteren können niedermolekulare Emulgatoren mit einem Molekulargewicht < 10³ g/mol in Mengen von 0 bis 5 Gew.-% bezogen auf die Polymerdispersion eingesetzt werden.

Herstellung und Eigenschaften des wasserlöslichen Polymerisats aus dem Monomergemisch A) in wäßriger Lösung

Die Menge des Monomerengemischs A) bezogen auf 100 Gew.-Teile Wasser als Reaktionsmedium liegt zwischen 5 und 80 Gew.-Teilen, vorzugsweise zwischen 10 und 50 Gew.-Teilen. Werden die Monomeren a1) und ggfs a3) als wäßrige Lösung eingesetzt, so wird der Wasseranteil dem Reaktionsmedium zugeschlagen. Die Menge des polymeren Dispergiermittels D) bezogen auf 100 Gew.-Teile Wasser als Reaktionsmedium liegt zwischen 1 und 50 Gew.-Teilen, bevorzugt zwischen 5 und 40 Gew.-Teilen.
Zum Starten der Polymerisation werden beispielsweise radikalische Initiatoren (= Polymerisationsstarter) oder hochenergetische Strahlung, wie beispielsweise UV-Licht, verwendet. Bevorzugt werden als radikalische Initiatoren beispielsweise 2,2'-Azobisisobutyronitril, 2,2'-Azobis(2-amidopropan)dihydrochlorid, bevorzugt in Dimethylformamid gelöst, Kaliumpersulfat, Ammoniumpersulfat, Wasserstoffperoxid, gegebenenfalls in Kombination mit einem Reduktionsmittel wie beispielsweise einem Amin oder Natriumsulfit eingesetzt. Der Anteil an Initiator, bezogen auf das Monomerengemisch A), liegt gewöhnlich zwischen 10⁻⁵ und 5 Gew.-%, vorzugsweise zwischen 10⁻⁴ und 1 Gew.-%, wobei der Initiator zu Beginn der Polymerisation vollständig oder teilweise mit nachfolgender Dosierung über den gesamten Polymerisationsverlauf zugegeben werden kann. Ebenso kann das Monomerengemisch A) vollständig am Anfang der Polymerisation oder teilweise als Zulauf über den gesamten Polymerisationsverlauf zugegeben werden. Die Polymerisationstemperatur beträgt zwischen 0 und 100 Grad C, bevorzugt zwischen 40 und 55 Grad C. Vorzugsweise wird unter Inertgas-Atmosphäre, beispielsweise unter Stickstoff-Atmosphäre polymerisiert. Der Endumsatz der Polymerisation liegt über 97 Gew.-% des Monomerengemischs A), wofür im allgemeinen zwischen 1 und 8 Stunden Polymerisationsdauer erforderlich sind.

### Vorteilhafte Wirkungen der Erfindung

Die erfindungsgemäßen wäßrigen Polymerdispersionen zeichnen sich gemessen an der Polymerkonzentration und dem mittleren Molekulargewicht M_{w} des Polymerisats, bestehend aus Monomerbausteinen gemäß Gemisch A), durch eine überraschend niedrige Viskosität aus im Vergleich zu Polymerdispersionen bestehend aus Polymerisat ohne hydrophobe Monomerbausteine a2). Durch Einbau von amphiphilen Monomerbausteinen a3) kann die Viskosität der wäßrigen Polymerdispersion weiter verringert werden. Dies verbessert die Handhabbarkeit von wäßrigen Polymerdispersionen mit hohem Polymerisatanteil (und damit hohem Wirkstoffanteil) außerordentlich.
Bei Verdünnen der wäßrigen Polymerdispersion mit Wasser steigt die aktuelle Viskosität auf ein sehr hohes Maximum, wobei das System klar wird. Hierbei wird die verdickende Wirkung des dispergierten Polymerisats deutlich. Dabei sind die Viskosität bei 1 % Polymerisatgehalt und Flockungswerte (KSD) der wäßrigen Polymerisatlösungen auf einem hohen Niveau, wobei das bevorzugt eingesetzte Dispergiermittel D) Poly-DADMAC gleichzeitig als Wirkstoff, d.h. als Störstoffänger für Kreislaufwasser und zur Unterstützung der Flockenbildung beispielsweise bei der Klärschlammkoagulation, fungiert.
Die Abwesenheit von organischen Lösungsmitteln gewährleistet eine sichere Handhabung (keine Entflammbarkeit) und eine ökologisch unbedenkliche Verwendung der erfindungsgemäßen Polymerdispersionen als Verdickungsmittel, Flockungshilfsmittel für elektrisch geladene Schwebeteilchen, als Retentionsmittel für die Papierherstellung und/oder als Bodenverbesserungsmittel. In isolierter oder wasserarmer Form kann das erfindungsgemäße Polymerisat als Entwässerungsmittel beispielsweise im Hygienebereich verwendet werden.

Die folgenden Beispiele sollen die Erfindung erläutern. Die physikalischen Daten wurden anhand folgender Normen bestimmt:
Dynamische Viskosität n [mPa·sj nach DIN 53018/53019.
- Flockungsverhalten KSD [s]:: Kaolinsedimentation gemäß firmeninterner Vorschrift
- Molekulargewicht M_{w}:: per Gelpermeationschromatographie (Standard: Poly(2-Trimethyl-ammoniumethylacrylatchlorid)

### BEISPIELE

### Beispiel 1

428,6 g einer 35 %igen wäßrigen Poly-DADMAC-Lösung, 60 g Acrylamid, 93,8 g einer 80 %-igen wäßrigen 2-Trimethylammoniumethylacrylatchlorid-Lösung, 15 g Ethylacrylat und 402,6 g Wasser werden in einem Reaktionsgefäß mit N₂ entgast und unter Rühren auf 53 Grad C erwärmt.
Anschließend werden 0,15 g Azodiisobutyronitril (AIBN) gelöst in 1,36 g Dimethylformamid (DMF) hinzugefügt. Nach 3 Stunden unter Rühren wird die Temperatur auf 65 Grad C erhöht und weitere 0,15 g AIBN gelöst in 1,35 g DMF hinzugefügt.
Die Polymerisation ist nach einer weiteren Stunde beendet.

Die dynamische Viskosität der wäßrigen Polymerdispersion beträgt η₁ = 73 500 mPa s.
Die dynamische Viskosität einer 1 %-igen wäßrigen Lösung des Polymerisats beträgt η₂ = 992 mPas.
- Die Flockungswerte betragen:: KSD 1 = 10,6 sec. KSD 2 = 12,9 sec.
Das Molekulargewicht M_{w} des Polymerisats beträgt M_{w} > 10⁶ Dalton.

### Beispiel 2

371,5 g einer 35 %igen wäßrigen Poly-DADMAC-Lösung, 52 g Acrylamid, 81,3 g einer 80 %igen wäßrigen 2-Trimethylammoniumethylacrylatchlorid-Lösung, 13 g Ethylacrylat und 482,2 g Wasser werden gemäß Beispiel 1 polymerisiert.

Die dynamische Viskosität der wäßrigen Polymerdispersion gemäß Beispiel 2 beträgt η₁ = 16 000 mPa·s. Die dynamische Viskosität einer 1 %igen wäßrigen Lösung des Polymerisats beträgt n₂ = 882 mPa s.
- Die Flockungswerte betragen :: KSD 1 = 12,5 sec. KSD 2 = 16,4 sec.

### Beispiel 3

428,6 g einer 35 %igen wäßrigen Poly-DADMAC-Lösung, 57 g Acrylamid, 93,8 g einer 80 %-igen wäßrigen 2-Trimethylammoniumacrylatchlorid-Lösung, 15 g Ethylacrylat, 3 g Methacrylsäureester von 20 Ethylenoxid-Einheiten mit einer endständigen C₁₃H₂₇-Gruppe und 402,6 g Wasser werden gemäß Beispiel 1 polymerisiert.

Die dynamische Viskosität der wäßrigen Polymerdispersion beträgt η₁ = 32 900 mPa·s.
Die dynamische Viskosität einer 1 %-igen wäßrigen Lösung des Polymerisats beträgt η₂ = 520 mPa·s.
- Die Flockungswerte betragen:: KSD1 = 13,7 sec. KSD2 = 19,8 sec.

## Patentansprüche

1. Wäßrige Dispersion wasserlöslicher Polymerisate, gebildet durch Polymerisation eines Gemisches A) aus verschiedenen Monomerbestandteilen a1), a2) und gegebenenfalls a3) in Gegenwart eines polymeren Dispergiermittels D),
dadurch gekennzeichnet,
daß das Gemisch A) aus folgenden chemisch verschiedenen Monomerbestandteilen aufgebaut ist:
a1) 99 bis 70 Gew.-% mindestens eines wasserlöslichen Monomeren
a2) 1 bis 30 Gew.-% mindestens eines hydrophoben Monomeren der Formel I 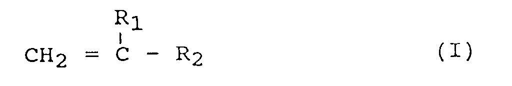 wobei
R₁ = Wasserstoff oder Alkyl mit 1 bis 4 Kohlenstoffatomen und
R₂ = Alkyl mit 1 bis 4 Kohlenstoffatomen, Cycloalkyl mit 5 bis 12 Kohlenstoffatomen, Aryl mit 6 bis 12 Kohlenstoffatomen,
oder = 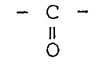 O - R₃ mit R₃ = Alkyl mit 2 bis 8 Kohlenstoffatomen, Cycloalkyl mit 5 bis 12 Kohlenstoffatomen oder Aryl mit 6 bis 12 Kohlenstoffatomen sind
und gegebenenfalls
a3) 0 bis 20 Gew.-% mindestens eines amphiphilen Monomeren, wobei sich die Monomerkomponenten a1), a2) und a3) jeweils zu 100 Gew.-% ergänzen, sowie daß die wasserlöslichen Polymerisate ein mittleres Molekulargewicht M_{w} (Gewichtsmittel) von mindestens 10⁶ g/mol aufweisen.

2. Wäßrige Dispersion nach Anspruch 1, dadurch gekennzeichnet, daß mindestens eines der wasserlöslichen Monomeren a1) mindestens eine ionische Gruppe aufweist.

3. Wäßrige Dispersion nach den Ansprüchen 1 und 2, dadurch gekennzeichnet, daß das amphiphile Monomere a3) eine Verbindung der Formel II ist: 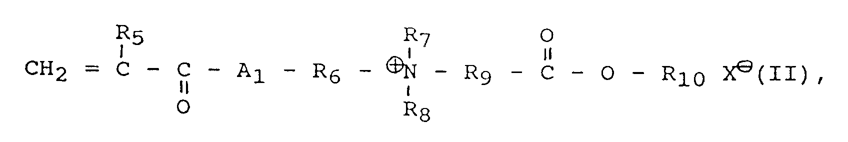 wobei
A₁ = O, NH, NR₄ mit R₄ = Alkyl mit 1 bis 4 Kohlenstoffatomen
R₅ = Wasserstoff oder Methyl
R₆ = Alkylen mit 1 bis 6 Kohlenstoffatomen,
R₇ und R₈ = unabhängig voneinander Alkyl mit 1 bis 6 Kohlenstoffatomen
R₉ = Alkylen mit 1 bis 6 Kohlenstoffatomen
R₁₀ = Alkyl, Aryl und/oder Aralkyl mit 8 bis 32 Kohlenstoffatomen
und
X = Halogen, Pseudohalogen, Acetat oder SO₄CH₃ sind.

4. Wäßrige Dispersion nach den Ansprüchen 1 und 2, dadurch gekennzeichnet, daß das amphiphile Monomere eine Verbindung der Formel III ist: 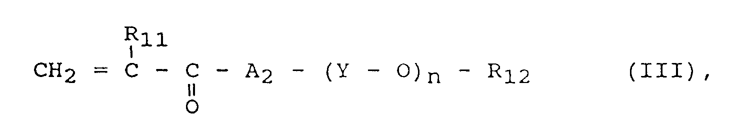 wobei
A₂ = O, NH, NR₁₃ mit R₁₃ = Alkyl mit 1 bis 4 Kohlenstoffatomen
R₁₁ = Wasserstoff oder Methyl
R₁₂ = Alkylrest, Arylrest und/oder Aralkylrest mit 8 bis 32 Kohlenstoffatomen
Y = Alkylen mit 2 bis 6 Kohlenstoffatomen
und
n = ganze Zahl zwischen 1 und 50
sind.

5. Wäßrige Dispersion nach den Ansprüchen 1 bis 4, dadurch gekennzeichnet, daß das Dispergiermittel D) ein Polyelektrolyt mit einem Molekulargewicht M_{w} < 5 x 10⁵ g/mol ist.

6. Wäßrige Dispersion nach den Ansprüchen 1 bis 5, dadurch gekennzeichnet, daß das Dispergiermittel D) ein Polyalkylenether ist, wobei die Alkylengruppen 2 bis 6 Kohlenstoffatome aufweisen.

7. Verwendung der wäßrigen Dispersionen gemäß den Ansprüchen 1 bis 6 als Flockungsmittel für elektrisch geladene Schwebeteilchen, als Retentionsmittel für die Papierherstellung, als Verdickungsmittel, als Entwässerungsmittel und/oder als Bodenverbesserungsmittel.

## Claims

1. Aqueous dispersion of water-soluble polymers, formed by polymerisation of a mixture A) of various monomer constituents a1), a2) and optionally a3) in the presence of a polymeric dispersant D), characterised in that the mixture A) is made up of the following chemically different monomer constituents:
a1) 99 to 70 wt.% of at least one water-soluble monomer
a2) 1 to 30 wt.% of at least one hydrophobic monomer of formula I 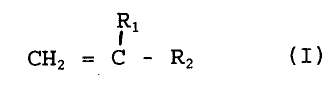 wherein
R₁ = hydrogen or C₁₋₄-alkyl and
R₂ = C₁₋₄-alkyl, C₅₋₁₂-cycloalkyl, C₆₋₁₂-aryl,
or = 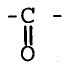 O - R₃ where R₃ = C₂₋₈-alkyl,
C₅₋₁₂-cycloalkyl or C₆₋₁₂-aryl,
and optionally
a3) 0 to 20 wt.% of at least one amphiphilic monomer, wherein the monomer components a1), a2) and a3) all add up to 100 wt.%,
and the water-soluble polymers have a mean molecular weight M_{w} (weight average) of at least 10⁶ g/mol.

2. Aqueous dispersion according to claim 1, characterised in that at least one of the water-soluble monomers a1) has at least one ionic group.

3. Aqueous dispersion according to claims 1 and 2, characterised in that the amphiphilic monomer a3) is a compound of formula II: 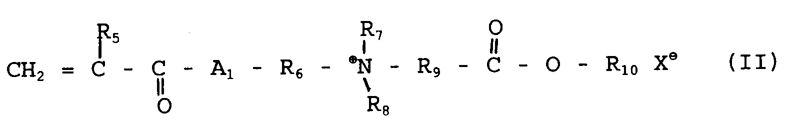 wherein
A₁ = O, NH, NR₄ where R₄ = C₁₋₄-alkyl,
R₅ = hydrogen or methyl,
R₆ = C₁₋₆-alkylene,
R₇ and R₈ independently of one another represent C₁₋₆-alkyl,
R₉ = C₁₋₆-alkylene,
R₁₀ = alkyl, aryl and/or C₈₋₃₂-aralkyl
and X = halogen, pseudohalogen, acetate or SO₄CH₃.

4. Aqueous dispersion according to claims 1 and 2, characterised in that the amphiphilic monomer a3) is a compound of formula III: 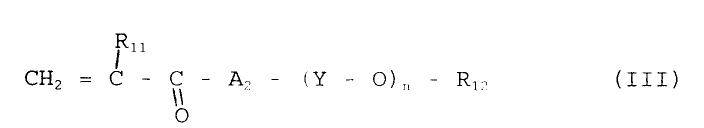 wherein
A₂ = O, NH, NR₁₃ where R₁₃ = C₁₋₄-alkyl,
R₁₁ = hydrogen or methyl,
R₁₂ = an alkyl group, aryl group and/or aralkyl group having 8 to 32 carbon atoms,
Y = C₂₋₆-alkylene and
n = an integer between 1 and 50.

5. Aqueous dispersion according to claims 1 to 4, characterised in that the dispersant D) is a polyelectrolyte with a molecular weight M_{w} < 5 x 10⁵ g/mol.

6. Aqueous dispersion according to claims 1 to 5, characterised in that the dispersant D) is a polyalkylene ether wherein the alkylene groups have 2 to 6 carbon atoms.

7. Use of the aqueous dispersions according to claims 1 to 6 as flocculating agents for electrically charged suspended particles, as retention means for paper manufacture, as thickeners, as dewatering agents and/or as soil improvers.

## Revendications

1. Dispersion aqueuse de polymérisats solubles dans l'eau, formée par polymérisat d'un mélange A) à base de différents constituants monomères a1) a2) et le cas échéant a3) en présence d'un agent dispersant polymère D),
caractérisée en ce que
le mélange A) est constitué de constituants de monomères chimiquement différents, suivants :
a1) de 99 à 70 % en poids d'au moins un monomère soluble dans l'eau,
a2) de 1 à 30 % en poids d'au moins un monomère hydrophobe de formule I : 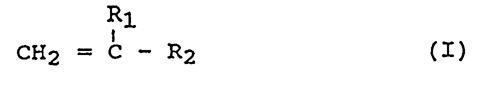 dans laquelle
R₁ est égal à un hydrogène ou un alkyle ayant de 1 à 4 atomes de carbone,,
et R₂ est un alkyle ayant de 1 à 4 atomes de carbone, un cycloalkyle ayant de 5 à 12 atomes de carbone, un aryle ayant de 6 à 12 atomes de carbone ou : 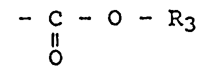
avec R₃ = alkyle avec de 2 à 8 atomes de carbone, un cycloalkyle avec de 5 à 12 atomes de carbone, ou un aryle avec de 6 à 12 atomes et le cas échéant :
a3) de 0 à 20 % en poids d'au moins un monomère amphiphile, pour lesquels les composants de monomères a1), a2) et a3), se complètent respectivement à 100 % en poids, aussi en ce que les polymérisats solubles dans l'eau, possèdent un poids moléculaire moyen M_{w} (moyenne pondérale) d'au moins 10⁶ g/mol.

2. Dispersion aqueuse selon la revendication 1, caractérisée en ce qu' au moins un des monomères a1) solubles dans l'eau possède au moins un groupe ionique.

3. Dispersion aqueuse selon les revendications 1 et 2, caractérisée en ce que
le monomère amphiphile a3) est un composé de formule II : 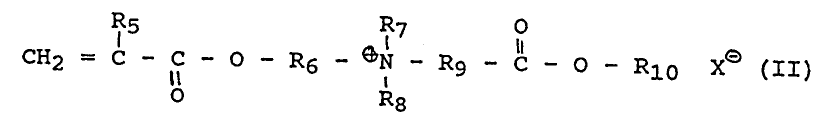 dans laquelle
A₁ = O, NH, NR₄ avec R₄ = alkyle ayant de 1 à 4 atomes de carbone
R₅ est un hydrogène ou un méthyle
R₆ est un alkylène ayant de 1 à 6 atomes de carbone
R₇ et R₈ = indépendamment l'un de l'autre, sont un alkyle ayant de 1 à 6 atomes de carbone
R₉ est un alkylène ayant de 1 à 6 atomes de carbone
R₁₀ est un alkyle, un aryle et/ou un aralkyle ayant de 8 à 32 atomes de carbone et
X est un halogène, un pseudohalogène, un acétate ou SO₄CH₃.

4. Dispersion aqueuse selon les revendications 1 et 2, caractérisée en ce que
le monomère amphiphile est un composé de formule III : 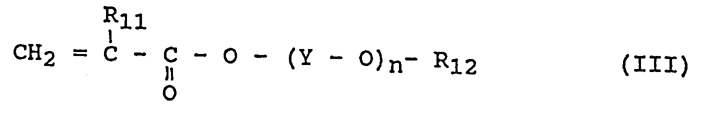 dans laquelle
A₂ = O, NH, NR₁₃ avec R₁₃ = alkyle avec de 1 à 4 atomes de carbone
R₁₁ est de l'hydrogène ou un méthyle
R₁₂ est un radical alkyle, aryle et/ou aralkyle ayant de 8 à 32 atomes de carbone
Y est un alkylène ayant de 2 à 6 atomes de carbone et
n est un nombre entier compris entre 1 et 50.

5. Dispersion aqueuse selon les revendications 1 à 4, caractérisée en ce que
l'agent dispersant D) est un polyélectrolyte ayant un poids moléculaire M_{w} < 5 x 10⁵ g/mol.

6. Dispersion aqueuse selon les revendications 1 à 5, caractérisée en ce que
l'agent dispersant D) est un polyalkylène éther pour lequel les groupes alkylène possèdent de 2 à 6 atomes de carbone.

7. Utilisation des dispersions aqueuses conformément aux revendications 1 à 6 en tant qu'agent de floculation pour des particules en suspension chargées électriquement, comme agent de rétention pour la production du papier, comme agent épaississant, comme agent de déshydratation et/ou comme agent d'amélioration des sols.
